(19)

Europäisches
Patentamt
European
Patent Office
Office européen
des brevets

(11) **EP 4 737 140 A1**

(12) **EUROPEAN PATENT APPLICATION**

(43) Date of publication:
    **06.05.2026 Bulletin 2026/19**

(21) Application number: **25205269.1**

(22) Date of filing: **29.09.2025**

(51) International Patent Classification (IPC):
    ***B60C 23/06*** (2006.01)

(52) Cooperative Patent Classification (CPC):
    **B60C 23/061**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **29.10.2024 JP 2024189816**

(71) Applicant: **SUMITOMO RUBBER INDUSTRIES,
    LTD.**
    **Kobe-shi, Hyogo 651-0072 (JP)**

(72) Inventors:
    • **MURATA, Hiroki**
      **Chuo-ku, Kobe-shi, Hyogo, 651-0072 (JP)**
    • **MASUDA, Hidetaka**
      **Chuo-ku, Kobe-shi, Hyogo, 651-0072 (JP)**

(74) Representative: **TBK**
    **Bavariaring 4-6**
    **80336 München (DE)**

(54) **DETECTION DEVICE, DEFLATION DETECTION METHOD, AND DEFLATION DETECTION
    PROGRAM FOR ONE-WHEEL DEFLATION OF TIRE**

(57)     A deflation detection device includes an acquisition unit, an index calculation unit, a storage unit, and a deflation determination unit. The acquisition unit is configured to acquire rotation speed information of each of tires included in a vehicle during running of the vehicle. The index calculation unit is configured to calculate a relative deflation index that compares a rotation speed of each of the tires, based on the acquired rotation speed information. The storage unit is configured to store the relative deflation index calculated at a first time point during a period when the vehicle makes a first run, as a reference value. The deflation determination unit is configured to determine whether or not deflation has occurred in one tire among the tires, based on the reference value and the relative deflation index calculated at a second time point after the first time point during the first run.

FIG. 3A

START

RESET DATA STORED LAST TIME — S10

ACQUIRE ROTATION SPEED INFORMATION FROM WHEEL — S11

REJECT DATA ← NO — IS DATA VALID? — S12

YES

NO ← HAVE PREDETERMINED NUMBER OF PIECES OF DATA BEEN ACCUMULATED? — S13

YES

CALCULATE RELATIVE DEFLATION INDEX AND STORE RELATIVE DEFLATION INDEX AS REFERENCE VALUE — S14

ACQUIRE ROTATION SPEED INFORMATION FROM WHEEL SPEED SENSORS — S15

IS DATA VALID? — S16

NO

YES

CALCULATE RELATIVE DEFLATION INDEX DEL1 — S17

HAS ONE-WHEEL DEFLATION OCCURRED? — S18

NO

YES

GENERATE WARNING — S19

**Description**

BACKGROUND OF THE INVENTION

Field of the Invention

The present invention relates to a detection device, a deflation detection method, and a deflation detection program for detecting one-wheel deflation of a tire included in a wheel.

Background Art

Conventionally, a system for automatically detecting deflation of a tire (tire pressure monitoring system; TPMS) has been studied. Information indicating that a tire has been deflated can be used, for example, to alert the driver. Methods for detecting deflation of a tire include a method in which, for example, a pressure sensor is mounted to a tire to directly measure the air pressure of the tire, and a method in which deflation of a tire is indirectly evaluated using another index. An example of the indirect method is a dynamic loaded radius (DLR) method. In the DLR method, a phenomenon that a deflated tire collapses during running, thereby reducing a dynamic loaded radius and causing the tire to rotate at a higher speed, is utilized, and deflation of the tire is inferred based on the rotation speed of the tire.

Japanese Laid-Open Patent Publication No. 2017-149340 discloses deflation indexes DEL1 to DEL3 for inferring deflation according to the DLR method. In Japanese Laid-Open Patent Publication No. 2017-149340, DEL1 to DEL3 are defined as follows. Here, V1 to V4 are the rotation speeds of front left, front right, rear left, and rear right tires, respectively.

$$DEL1 = [(V1 + V4)/(V2 + V3) - 1] \times 100 \ (\%)$$

$$DEL2 = [(V1 + V2)/(V3 + V4) - 1] \times 100 \ (\%)$$

$$DEL3 = [(V1 + V3)/(V2 + V4) - 1] \times 100 \ (\%)$$

In deflation determination using a combination of the deflation indexes DEL1 to DEL3 described above, reference values for the deflation indexes DEL1 to DEL3 are stored in advance in a vehicle. Here, as disclosed in Japanese Laid-Open Patent Publication No. 2017-149340, in order to perform accurate deflation determination, it is necessary to update the reference values stored in the vehicle, after the air pressure of each tire is adjusted. Normally, the reference values are updated through an initialization operation by a driver on the vehicle.

Various measures have been taken to prevent the driver from forgetting to perform the initialization operation described above or performing the initialization operation without adjusting the air pressure. However, from a viewpoint different from this, there has been a demand for a technology in which a decrease in the accuracy of deflation determination related to initialization is not something to be concerned about and that is useful for deflation detection.

An object of the present invention is to provide a deflation detection device, a deflation detection method, and a deflation detection program for one-wheel deflation of a tire, which do not require an initialization operation.

SUMMARY OF THE INVENTION

A deflation detection device for one-wheel deflation according to a first aspect of the present invention includes an acquisition unit, an index calculation unit, a storage unit, and a deflation determination unit. The acquisition unit is configured to acquire rotation speed information of each of tires included in a vehicle during running of the vehicle. The index calculation unit is configured to calculate a relative deflation index that compares a rotation speed of each of the tires, based on the acquired rotation speed information. The storage unit is configured to store the relative deflation index calculated at a first time point during a period when the vehicle makes a first run, as a reference value. The deflation determination unit is configured to determine whether or not deflation has occurred in one tire among the tires, based on the reference value and the relative deflation index calculated at a second time point after the first time point during the first run.

A deflation detection device according to a second aspect is the deflation detection device according to the first aspect, further including a regression analysis unit configured to, based on multiple data sets of an elapsed time from start of the first run and the relative deflation index at the elapsed time, derive a regression equation with the relative deflation index as a response variable and the elapsed time as an explanatory variable, wherein the deflation determination unit further determines whether or not deflation has occurred in one tire among the tires, based on a regression coefficient included in the regression equation.

A deflation detection device according to a third aspect is the deflation detection device according to the first or second aspect, further including a reset unit configured to delete the reference value from the storage unit after the first run if, during the first run, it is not determined by the deflation determination unit that deflation has occurred in the one tire.

A deflation detection device according to a fourth aspect is the deflation detection device according to any one of the first to third aspects, further including a trend derivation unit configured to, based on multiple data sets of a time $t(k)$ corresponding to a kth ($k$ = 1, 2, ..., n) run of the vehicle in time-series order and a representative value $Q(k)$ of the relative deflation index calculated during the kth run, derive a time-series change trend of the representative value $Q(k)$, wherein the deflation determination unit further determines whether or not deflation has occurred in one tire among the tires, based on the change trend.

A deflation detection device for one-wheel deflation according to a fifth aspect includes an acquisition unit, a regression analysis unit, and a deflation determination unit. The acquisition unit is configured to acquire rotation speed information of each of tires included in a vehicle during running of the vehicle. The index calculation unit is configured to calculate a relative deflation index that compares a rotation speed of each of the tires, based on the acquired rotation speed information. The regression analysis unit is configured to, based on multiple data sets of an elapsed time from start of the first run and the relative deflation index at the elapsed time, derive a regression equation with the relative deflation index as a response variable and the elapsed time as an explanatory variable, during a period when the vehicle makes a first run. The deflation determination unit is configured to determine whether or not deflation has occurred in one tire among the tires, based on a regression coefficient included in the regression equation.

A deflation detection device for one-wheel deflation according to a sixth aspect includes an acquisition unit, an index calculation unit, a trend derivation unit, and a deflation determination unit. The acquisition unit is configured to acquire rotation speed information of each of tires included in a vehicle during running of the vehicle. The index calculation unit is configured to calculate a relative deflation index that compares a rotation speed of each of the tires, based on the acquired rotation speed information. The trend derivation unit is configured to, based on multiple data sets of a time $t(k)$ corresponding to a kth ($k$ = 1, 2, ..., n) run of the vehicle in time-series order and a representative value $Q(k)$ of the relative deflation index calculated during the kth run, derive a time-series change trend of the representative value $Q(k)$. The deflation determination unit is configured to determine whether or not deflation has occurred in one tire among the tires, based on the change trend.

A deflation detection method for one-wheel deflation according to a seventh aspect is a deflation detection method executed by one or more computers connected to a storage unit, the deflation detection method including the following:

(1) acquiring rotation speed information of each of tires included in a vehicle during running of the vehicle;
(2) calculating a relative deflation index that compares a rotation speed of each of the tires, based on the acquired rotation speed information;
(3) storing the relative deflation index calculated at a first time point during a period when the vehicle makes a first run, as a reference value in the storage unit; and
(4) determining whether or not deflation has occurred in one tire among the tires, based on the reference value and the relative deflation index calculated at a second time point after the first time point during the first run.

A deflation detection method for one-wheel deflation according to an eighth aspect is a deflation detection method for one-wheel deflation, executed by one or more computers, the deflation detection method including the following:

(1) acquiring rotation speed information of each of tires included in a vehicle during running of the vehicle;
(2) calculating a relative deflation index that compares a rotation speed of each of the tires, based on the acquired rotation speed information;
(3) based on multiple data sets of an elapsed time from start of the first run and the relative deflation index at the elapsed time, deriving a regression equation with the relative deflation index as a response variable and the elapsed time as an explanatory variable, during a period when the vehicle makes a first run; and
(4) determining whether or not deflation has occurred in one tire among the tires, based on a regression coefficient included in the regression equation.

A deflation detection method for one-wheel deflation according to a ninth aspect is a deflation detection method for one-wheel deflation executed by one or more computers, the deflation detection method including the following:

(1) acquiring rotation speed information of each of tires included in a vehicle during running of the vehicle;
(2) calculating a relative deflation index that compares a rotation speed of each of the tires, based on the acquired rotation speed information;

(3) based on multiple data sets of a time t(k) corresponding to a kth (k = 1, 2, ..., n) run of the vehicle in time-series order and a representative value Q(k) of the relative deflation index calculated during the kth run, deriving a time-series change trend of the representative value Q(k); and

(4) determining whether or not deflation has occurred in one tire among the tires, based on the change trend.

A deflation detection program for one-wheel deflation according to a tenth aspect causes one or more computers connected to a storage unit to execute the following:

(1) acquiring rotation speed information of each of tires included in a vehicle during running of the vehicle;

(2) calculating a relative deflation index that compares a rotation speed of each of the tires, based on the acquired rotation speed information;

(3) storing the relative deflation index calculated at a first time point during a period when the vehicle makes a first run, as a reference value in the storage unit; and

(4) determining whether or not deflation has occurred in one tire among the tires, based on the reference value and the relative deflation index calculated at a second time point after the first time point during the first run.

A deflation detection program for one-wheel deflation according to an eleventh aspect causes one or more computers to execute the following:

(1) acquiring rotation speed information of each of tires included in a vehicle during running of the vehicle;

(2) calculating a relative deflation index that compares a rotation speed of each of the tires, based on the acquired rotation speed information;

(3) based on multiple data sets of an elapsed time from start of the first run and the relative deflation index at the elapsed time, deriving a regression equation with the relative deflation index as a response variable and the elapsed time as an explanatory variable, during a period when the vehicle makes a first run; and

(4) determining whether or not deflation has occurred in one tire among the tires, based on a regression coefficient included in the regression equation.

A deflation detection program for one-wheel deflation according to a twelfth aspect causes one or more computers to execute the following:

(1) acquiring rotation speed information of each of tires included in a vehicle during running of the vehicle;

(2) calculating a relative deflation index that compares a rotation speed of each of the tires, based on the acquired rotation speed information;

(3) based on multiple data sets of a time t(k) corresponding to a kth (k = 1, 2, ..., n) run of the vehicle in time-series order and a representative value Q(k) of the relative deflation index calculated during the kth run, deriving a time-series change trend of the representative value Q(k); and

(4) determining whether or not deflation has occurred in one tire among the tires, based on the change trend.

According to the present invention, a deflation detection device, a deflation detection method, and a deflation detection program for one-wheel deflation of a tire, which do not require an initialization operation, are provided.

BRIEF DESCRIPTION OF THE DRAWINGS

FIG. 1 is a schematic diagram showing a situation in which a deflation detection device according to an embodiment of the present invention is installed in a vehicle;

FIG. 2 is a block diagram showing the electrical configuration of the deflation detection device;

FIG. 3A is a flowchart showing the flow of a first deflation detection process;

FIG. 3B illustrates the principle of the first deflation detection process;

FIG. 4A is a flowchart showing the flow of a second deflation detection process;

FIG. 4B illustrates the principle of the second deflation detection process;

FIG. 5A is a flowchart showing the flow of a third deflation detection process; and

FIG. 5B illustrates the principle of the third deflation detection process.

DETAILED DESCRIPTION

Hereinafter, a deflation detection device, a deflation detection method, and a deflation detection program according to an embodiment of the present invention will be described with reference to the drawings.

<1. Configuration of Deflation Detection Device>

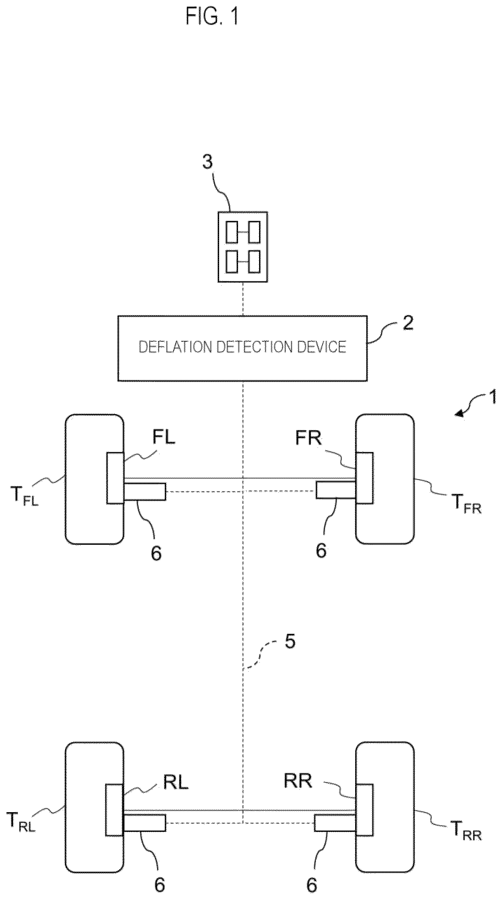

FIG. 1 is a schematic diagram showing a situation in which a deflation detection device 2 according to the present embodiment is installed in a vehicle 1. The vehicle 1 may include an internal combustion engine, may include an electric motor, or may include both an internal combustion engine and an electric motor, as a power unit. The vehicle 1 is a four-wheeled vehicle and includes a front left wheel FL, a front right wheel FR, a rear left wheel RL, and a rear right wheel RR. The vehicle 1 includes tires $T_{FL}$, $T_{FR}$, $T_{RL}$, and $T_{RR}$ mounted on these wheels. The deflation detection device 2 has a function of detecting one-wheel deflation that is deflation of any one of the tires $T_{FL}$, $T_{FR}$, $T_{RL}$, and $T_{RR}$. When one-wheel deflation is detected, the deflation detection device 2 issues a warning about this detection via a warning indicator 3 installed in the vehicle 1. The flow of such a deflation detection process will be described in detail later.

One-wheel deflation is detected based on the rotation speeds of the front left wheel FL, the front right wheel FR, the rear left wheel RL, and the rear right wheel RR. A wheel speed sensor 6 is mounted on each of the front left wheel FL, the front right wheel FR, the rear left wheel RL, and the rear right wheel RR. Each wheel speed sensor 6 detects a rotation speed signal representing the rotation speed of the wheel on which the wheel speed sensor 6 is mounted (in other words, rotation speed information of the tire $T_{FL}$, $T_{FR}$, $T_{RL}$, or $T_{RR}$). The wheel speed sensors 6 are connected to the deflation detection device 2 via a communication line 5 or wirelessly. The rotation speed signals detected by the wheel speed sensors 6 are sequentially transmitted to the deflation detection device 2.

As each wheel speed sensor 6, any sensor can be used as long as the sensor can detect the wheel speed of the wheel FL, FR, RL, or RR during running. For example, a sensor of a type that measures the wheel speed from an output signal of an electromagnetic pickup can be used, or a sensor of a type that generates power by using rotation, like a dynamo, and measures the wheel speed from the voltage at that time, can also be used. The mounting position of the wheel speed sensor 6 is also not particularly limited, and any position can be selected as appropriate according to the type of the sensor as long as it is possible to detect the wheel speed.

The warning indicator 3 can be realized in any form such as a liquid crystal display element or a liquid crystal monitor, as long as occurrence of deflation of a tire can be notified to a user. The mounting position of the warning indicator 3 can also be selected as appropriate, but the warning indicator 3 is preferably provided, for example, at a position, such as on an instrument panel, that is easily recognized by a driver. In the case where a control unit (deflation detection device 2) is connected to a car navigation system, a monitor for car navigation can also be used as the warning indicator 3. In the case where a monitor is used as the warning indicator 3, a warning can be displayed on the monitor as an icon or text information.

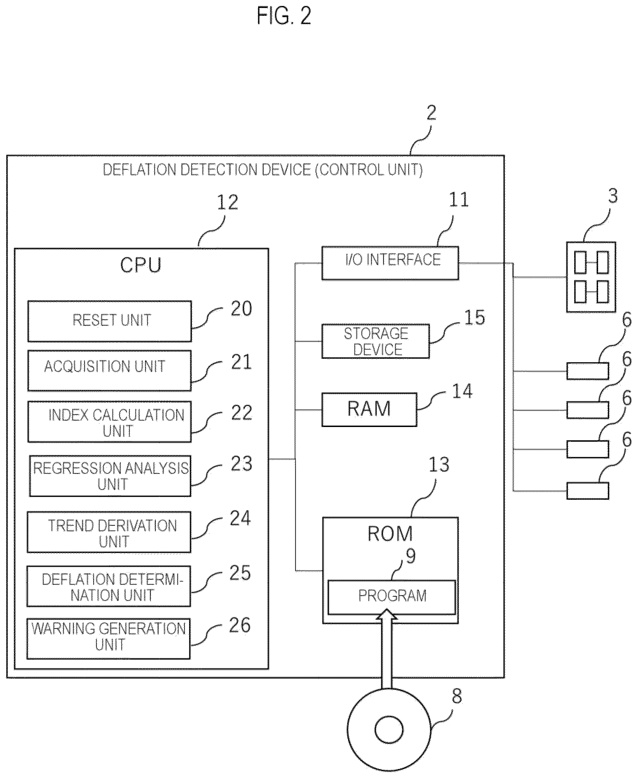

FIG. 2 is a block diagram showing the electrical configuration of the deflation detection device 2. The deflation detection device 2 is a control unit (in-vehicle computer) installed in the vehicle 1 as hardware and includes an I/O interface 11, a CPU (central processing unit) 12, a ROM (read only memory) 13, a RAM (random access memory) 14, and a nonvolatile rewritable storage device (storage unit) 15 as shown in FIG. 2. The I/O interface 11 is a communication device that realizes communication with external devices such as the wheel speed sensor 6 and the warning indicator 3. A program 9 for controlling the operation of each component of the vehicle 1 is stored in the ROM 13. The program 9 is written from a storage medium 8 such as a CD-ROM to the ROM 13. The CPU 12 reads out the program 9 from the ROM 13 and executes the program 9, thereby virtually operating as a reset unit 20, an acquisition unit 21, an index calculation unit 22, a regression analysis unit 23, a trend derivation unit 24, a deflation determination unit 25, and a warning generation unit 26. The details of the operations of the units 20 to 26 will be described later. The storage device 15 is composed of a hard disk, a flash memory, an EPROM, or the like. The storage place of the program 9 does not have to be the ROM 13 and may be the storage device 15. The RAM 14 and the storage device 15 are used as appropriate for the arithmetic operations of the CPU 12.

As described later, the deflation detection device 2 is configured to execute three different deflation detection processes for detecting deflation of any one of the tires $T_{FL}$, $T_{FR}$, $T_{RL}$, and $T_{RR}$ by a method conforming to the dynamic loaded radius (DLR) method. These first to third deflation detection processes have a common feature of being able to detect one-wheel deflation without requiring an initialization operation by the driver and also share a relative deflation index to be used. However, the first to third deflation detection processes each target one-wheel deflation due to a different event and can be executed in parallel and independently for the same vehicle 1 during the same run.

Hereinafter, a single unit of run of the vehicle 1 may be referred to as a "kth run (k = 1, 2, ..., n)." A single unit of run may be defined as, for example, a run made between one ON operation and one OFF operation of an internal combustion engine or electric motor. k represents the relative chronological order in which the run was made. That is, the "first run" refers to the earliest run among "k runs", the "nth run" refers to the latest run among the "k runs", and the "(k+1)th run" refers to the run made following the kth run after the "kth run" is completed.

<2-1. First Deflation Detection Process>

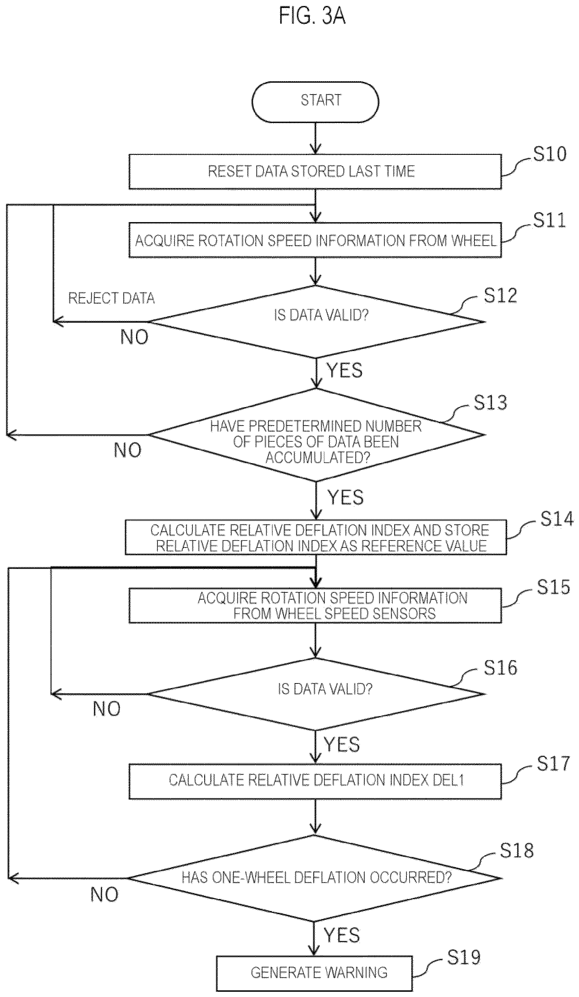

Hereinafter, the first deflation detection process executed during the kth run will be described with reference to FIG. 3A. The first deflation detection process starts when the kth run starts and ends when the kth run ends.

In step S10, the reset unit 20 deletes data stored in the storage device 15 during the (k-1)th run (i.e., during the previous run) from the storage device 15. The deleted data includes a reference value R(k-1) stored during the (k-1)th run. The reference value R will be described later. By step S10, a reference value storage area in the storage device 15 is reset.

In step S11, the acquisition unit 21 acquires time-series rotation speed signals from the respective wheel speed sensors 6 mounted on the wheels FL, FR, RL, and RR. The acquisition unit 21 converts the acquired rotation speed signals into rotation speeds V1 to V4 of the tires $T_{FL}$, $T_{FR}$, $T_{RL}$, and $T_{RR}$, respectively, and stores the rotation speeds V1 to V4 in the RAM 14 or the storage device 15.

In step S12, the acquisition unit 21 determines whether or not the data stored in step S11 is valid. Valid data is data acquired when the running conditions of the vehicle 1 are steady. The dynamic loaded radius of a tire varies not only depending on the air pressure state of the tire but also depending on the running conditions of the vehicle 1. Therefore, it is preferable that, for example, data acquired during extreme acceleration or deceleration or during cornering is not used and rejected. When it is determined in step S12 that the data is valid (YES), step S13 is executed next. When it is determined in step S12 that the data is not valid (NO), the data stored in step S11 is rejected and steps S11 and S12 are executed again.

In step S13, the acquisition unit 21 determines whether or not a predetermined number of valid pieces of data have been accumulated in the RAM 14 or the storage device 15. The predetermined number is the number of pieces of data of the rotation speeds V1 to V4 required for appropriately performing processes described later and is set in advance. When it is determined in step S13 that the predetermined number of valid pieces of data have been accumulated (YES), step S14 is executed next. When it is determined in step S13 that the number of valid pieces of data is less than the predetermined number (NO), steps S11 to S13 are executed again.

In step S14, the index calculation unit 22 calculates a relative deflation index DEL1 based on the rotation speeds V1 to V4. The relative deflation index of the present embodiment is an index that compares the rotation speed of each tire, as defined by the following equation (1).

$$\text{DEL1} = \{(V1 + V4) / (V2 + V3) - 1\} \times 100 \, (\%) \qquad (1)$$

The index calculation unit 22 substitutes data of the rotation speeds V1 to V4 acquired at the same time into the equation (1) and calculates multiple DEL1s and the average value thereof. The DEL1s and the average value thereof calculated thus are an example of a relative deflation index calculated at a first time point during a period when the kth run is made. The first time point is, for example, a time point at which about 1 to 3 minutes has elapsed after the kth run starts and may be a time point at which several seconds to several tens of seconds has continued. The index calculation unit 22 stores the calculated DEL1s or average value thereof as a reference value R(k) in the storage device 15.

In step S15, the acquisition unit 21 further acquires time-series rotation speed signals from the respective wheel speed sensors 6. As in step S11, the acquisition unit 21 converts the acquired rotation speed signals into rotation speeds V1 to V4 of the tires $T_{FL}$, $T_{FR}$, $T_{RL}$, and $T_{RR}$, respectively, and stores the rotation speeds V1 to V4 in the RAM 14 or the storage device 15.

In step S16, the acquisition unit 21 determines whether or not the data stored in step S15 is valid. This determination is the same as that in step S12 and thus the description thereof is omitted. When it is determined as YES in step S16, step S17 is executed next. When it is determined as NO in step S16, the data stored in step S15 is rejected and steps S15 and S16 are executed again.

In step S17, the index calculation unit 22 calculates a relative deflation index DEL1 based on the rotation speeds V1 to V4 determined to be valid in step S16. The relative deflation index DEL1 calculated in step S17 is an example of a relative deflation index calculated at a second time point.

In step S18, the deflation determination unit 25 determines the presence or absence of one-wheel deflation based on the reference value R(k) and the relative deflation index DEL1 calculated in step S17. Specifically, the deflation determination unit 25 compares |DEL1 - R(k)| with a predetermined threshold value Th1. If |DEL1 - R(k)| is less than or equal to the predetermined threshold value Th1, the deflation determination unit 25 determines that no one-wheel deflation has occurred (NO), and if |DEL1 - R(k)| exceeds the predetermined threshold value Th1, the deflation determination unit 25 determines that one-wheel deflation has occurred (YES).

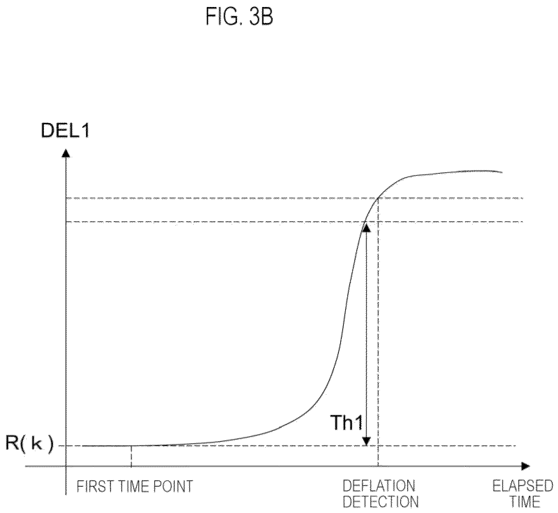

The predetermined threshold value Th1 is set, for example, based on the amount of change in DEL1 when the pressure of any one of the tires $T_{FL}$, $T_{FR}$, $T_{RL}$, and $T_{RR}$ decreases from the standardized internal pressure by 16% to 20%. As described above, if DEL1 changes relatively greatly with respect to the reference value R(k) during one unit of run, it is considered that a puncture has occurred in any one of the tires $T_{FL}$, $T_{FR}$, $T_{RL}$, and $T_{RR}$. In this case, it is considered that, as shown in FIG. 3B, DEL1 starts deviating from the reference value R(k) at a certain time point and the absolute value of the difference between DEL1 and the reference value R(k) increases irreversibly over time. Therefore, one-wheel deflation can be detected based on the reference value R(k) and DEL1 at the second time point by repeatedly executing steps S15 to S 18 at a predetermined cycle after step S14.

Referring again to FIG. 3A, when it is determined in step S18 that no one-wheel deflation has occurred (NO), steps S15 to S18 are executed again. That is, steps S15 to S18 are executed at a predetermined cycle unless one-wheel deflation is detected in step S18. When it is determined in step S18 that one-wheel deflation has occurred (YES), step S19 is executed.

In step S19, the warning generation unit 26 generates warning data indicating that one-wheel deflation has occurred and displays the warning data on the warning indicator 3. The warning data may be in any form as long as the warning data is data by which it can be notified to the driver that one-wheel deflation has occurred. The warning data may also include information that specifies the deflated tire in which deflation is considered to have occurred. For example, the deflated tire may be a tire having a rotation speed that deviates most from the other three rotation speeds as a result of comparison of the valid rotation speeds V1 to V4 at the same time. The warning indicator 3 may, for example, display a graphic representing the vehicle 1 and emphasize a location, corresponding to the wheel position of the tire in which deflation has occurred, on the graphic.

<2-2. Second Deflation Detection Process>

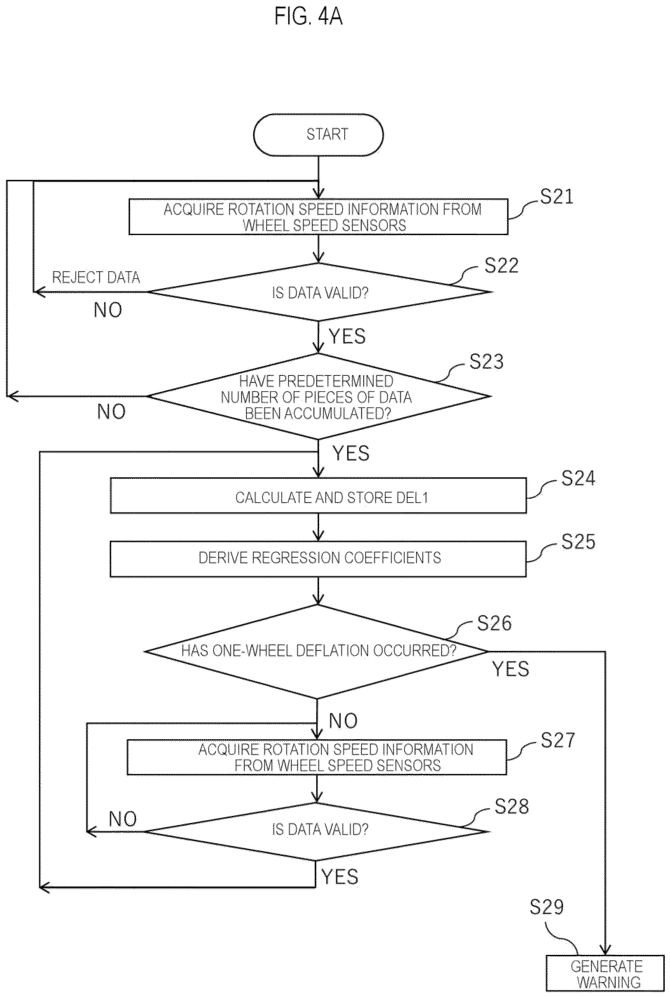

Hereinafter, the second deflation detection process executed during the kth run will be described with reference to FIG. 4A. The second deflation detection process starts when the kth run starts and ends when the kth run ends.

Steps S21 to S24 are the same as steps S11 to S14 executed in the first deflation detection process, respectively. Therefore, the description thereof is omitted. When it is determined as YES in both of steps S22 and S23, step S24 is executed next.

In step S24, the index calculation unit 22 calculates multiple DEL1s based on valid data of rotation speeds V1 to V4 acquired at the same time. Accordingly, multiple data sets each of which is a combination of an elapsed time from the start of the kth run and DEL1 at the elapsed time are generated. The number of the data sets described above is not particularly limited and can be set as appropriate. In addition, the predetermined number in step S23 can be a number sufficient to generate the multiple data sets. The index calculation unit 22 stores the generated multiple data sets in the RAM 14 or the storage device 15.

In step S25, the regression analysis unit 23 performs regression analysis based on the multiple data sets generated in step S24. Specifically, the regression analysis unit 23 derives a regression equation with DEL1 as a response variable and an elapsed time t from the start of the kth run as an explanatory variable. In the present embodiment, the regression equation is an equation, for a straight line, represented as $DEL1 = M(k) \cdot t + N(k)$. That is, the regression analysis unit 23 derives a slope M(k) and an intercept N(k) which are regression coefficients specifying this straight line. The derivation method is not particularly limited and, for example, the least squares method, the sequential least squares method, the Kalman filter, etc., may be used. However, from the viewpoint of saving arithmetic resources, sequential methods such as the sequential least squares method and the Kalman filter are preferable.

In step S26, the deflation determination unit 25 determines the presence or absence of one-wheel deflation based on the slope M(k) derived in step S25. Specifically, the deflation determination unit 25 compares the absolute value of the slope M(k) with a predetermined threshold value Th2. If the absolute value of the slope M(k) is less than or equal to the predetermined threshold value Th2, the deflation determination unit 25 determines that no one-wheel deflation has occurred (NO), and if the absolute value of the slope M(k) exceeds the predetermined threshold value Th2, the deflation determination unit 25 determines that one-wheel deflation has occurred (YES).

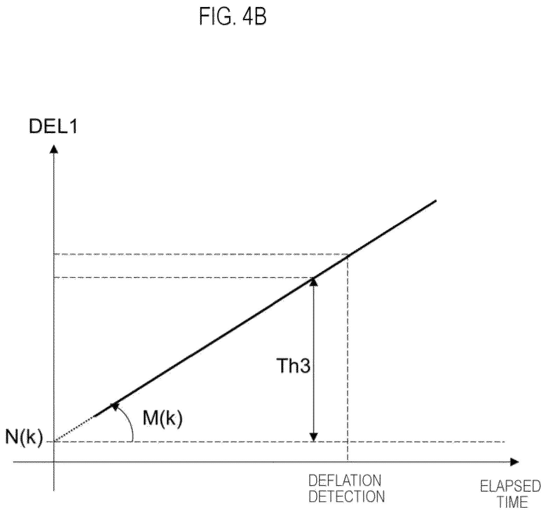

This is based on the following principle. When no one-wheel deflation has occurred, it is considered that DEL1 converges within a certain range regardless of the elapsed time from the start of the kth run. However, for example, if a sharp object such as a nail penetrates any one of the tires $T_{FL}$, $T_{FR}$, $T_{RL}$, and $T_{RR}$ during the previous run, the internal air is maintained at the time of stopping but leaks out through the puncture hole during rotation. Therefore, theoretically, DEL1 changes irreversibly with the elapsed time from the start of the kth run, and the absolute value of the slope M(k) also changes in a direction in which the absolute value increases, with the elapsed time as shown in FIG. 4B.

In addition to the above determination, the deflation determination unit 25 may compare the absolute value |DEL1 - N(k)| of the difference between the latest DEL1 and the initial intercept N(k) with a predetermined threshold value Th3 and determine whether |DEL1 - N(k)| is less than or equal to the predetermined threshold value Th3 or exceeds the predetermined threshold value Th3. For example, if it is determined based on the slope M(k) that one-wheel deflation has occurred, it is considered that the possibility that one-wheel deflation has occurred is even higher when |DEL1 - N(k)| exceeds the predetermined threshold value Th3. As described above, the determination based on |DEL1 - N(k)| can be used as an auxiliary means to improve the accuracy of the deflation determination based on the slope M(k). The initial intercept N(k) is a theoretical DEL1 at the start of run. Therefore, the comparison between the latest DEL1 and the initial intercept N(k) may be said to be equivalent to the determination as to the presence or absence of one-wheel deflation in step S18 in the first deflation detection process.

Referring again to FIG. 4A, when it is determined in step S26 that no one-wheel deflation has occurred (NO), steps S27 and S28 are executed. Steps S27 and S28 are the same as steps S21 and S22 and thus the description thereof is omitted. When it is determined as YES in step S28, steps S24 to S26 are executed again. That is, a new relative deflation index DEL1 is calculated based on newly acquired rotation speeds V1 to V4, and the slope M(k) and the intercept N(k) are updated sequentially.

On the other hand, when it is determined in step S26 that one-wheel deflation has occurred (YES), step S29 is executed. Step S29 is the same as step S19 and thus the description thereof is omitted.

<2-3. Third Deflation Detection Process>

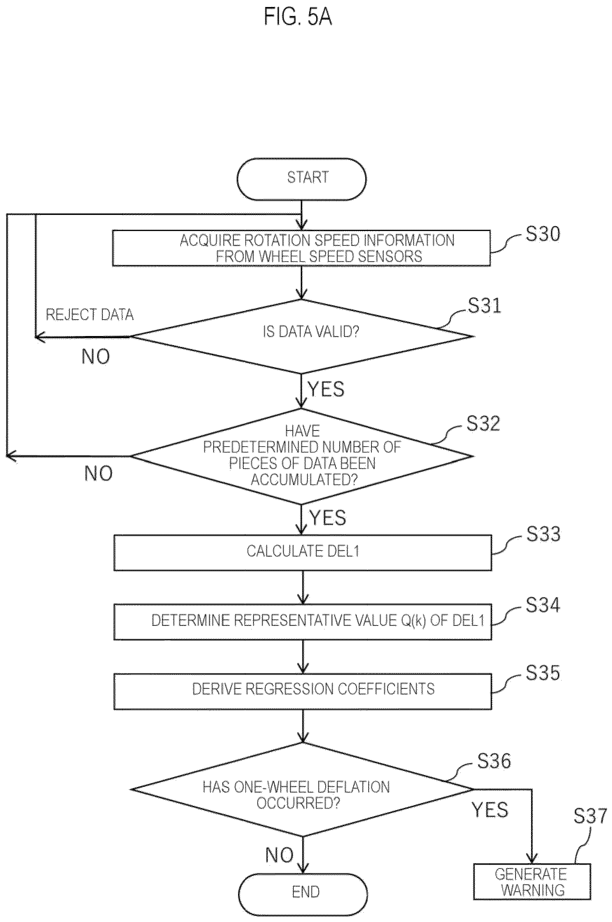

Hereinafter, the third deflation detection process will be described with reference to FIG. 5A. The third deflation detection process detects deflation caused by a factor that is difficult to detect during one unit of run, such as a slow puncture. The process in FIG. 5A starts when the power supply of the electrical system of the vehicle 1 is turned ON and stops when the power supply is turned OFF, for example.

Steps S30 to S32 are the same as steps S11 to S13 and are a process of the acquisition unit 21 acquiring rotation speeds V1 to V4 of the respective tires until a predetermined number of valid pieces of data have been accumulated. The predetermined number of pieces of data to be accumulated may be the same as or different from that in the first deflation detection process and the second deflation detection process.

In step S33, the index calculation unit 22 calculates a relative deflation index DEL1 from valid data of rotation speeds V1 to V4 according to the equation (1). In the present embodiment, the index calculation unit 22 calculates multiple DEL1s from multiple valid data sets of the rotation speeds V1 to V4. The multiple DEL1s are relative deflation indexes DEL1 at different time points during the kth run.

In step S34, the index calculation unit 22 determines a representative value Q(k) of DEL1 in the kth run based on the multiple DELIs calculated in step S33. The algorithm for determining the representative value Q(k) is not particularly limited, and, for example, the simple average of the multiple DEL1s calculated in step S33, a weighted average obtained by weighting the multiple DEL1s with the elapsed time, or the median value of the multiple DEL1s may be used as the representative value Q(k).

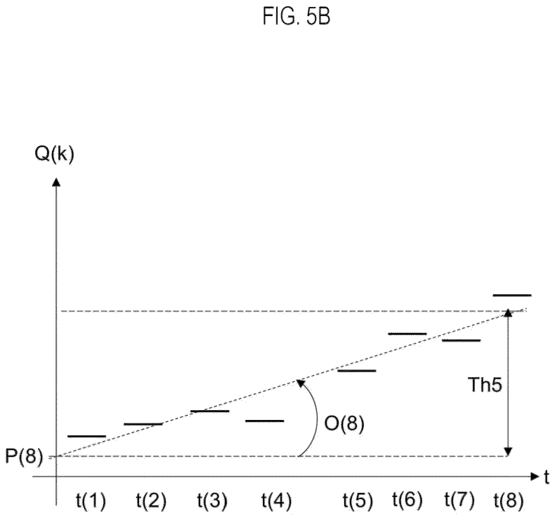

In step S35, the trend derivation unit 24 derives a trend of the representative value Q(k) with respect to an elapsed time t from the start of the first run. The elapsed time t is a cumulative time from the start of the first run, including the elapsed time between the kth run and the (k+1)th run. In the present embodiment, the trend derivation unit 24 derives a slope O(k) of a regression straight line (see FIG. 5B) with the elapsed time t as an explanatory variable and the representative value Q(k) as a response variable. The method for deriving the slope O(k) is not particularly limited, and, for example, the least squares method, the sequential least squares method, the Kalman filter, etc., may be used, but in the present embodiment, a sequential method is used. That is, the slope O(k) is updated sequentially each time the latest representative value Q(k) is newly acquired.

In step S36, the deflation determination unit 25 determines the presence or absence of one-wheel deflation based on the slope O(k). Specifically, the deflation determination unit 25 compares the absolute value of the slope O(k) with a predetermined threshold value Th4. If the absolute value of the slope O(k) is less than or equal to the predetermined threshold value Th4, the deflation determination unit 25 determines that no one-wheel deflation has occurred (NO), and if the absolute value of the slope O(k) exceeds the predetermined threshold value Th4, the deflation determination unit 25 determines that one-wheel deflation has occurred (YES).

This is based on the following principle. FIG. 5B is a graph showing an example of the change in the representative value Q(k) with respect to the elapsed time t. The elapsed time t(k) in the graph is assigned as the elapsed time corresponding to the kth run for convenience of description. Between the elapsed times t(1) and t(4), the representative value Q(k) does not show any particular trend with respect to the elapsed time t. In such a case, the absolute value of the slope O(k) converges to a relatively small value close to 0. Meanwhile, as the pressure of one tire starts gradually decreasing between the elapsed times t(4) and t(5), the representative value Q(k) changes in one direction along the vertical axis from the elapsed time t(5) to the elapsed time t(8). The representative value Q(k) may change reversely in the short term as in an example at the elapsed times t(6) and t(7) but shows an increasing or decreasing trend in the long term. The slope O(k) changes in a direction in which the absolute value thereof increases, when a trend appears in the representative value Q(k), and the absolute value thereof eventually exceeds the predetermined threshold value Th4 unless air pressure adjustment or the like is performed. Accordingly, even if the progress speed of one-wheel deflation is so slow that the one-wheel deflation cannot be detected by a deflation detection process for one unit of run, the one-wheel deflation can be detected. The predetermined threshold value Th4 can be set in advance, for example, in consideration of the speed at which the tire deflates to a warning threshold value under predetermined conditions such as the travel distance or number of runs of the vehicle 1 per unit period.

In addition to the above determination, the deflation determination unit 25 may compare the absolute value |Q(k) - P(k)| of the difference between the latest representative value Q(k) (in the example in FIG. 5B, Q(8)) and an intercept P(k) of the latest regression equation (in the example in FIG. 5B, P(8)) with a predetermined threshold value Th5 and determine whether |Q(k) - P(k)| is less than or equal to the predetermined threshold value Th5 or exceeds the predetermined threshold value Th5. The intercept P(k) of the regression equation is theoretically equal to or close to a representative value Q(1) at the elapsed time t(1). Therefore, if it is determined based on the slope O(k) that one-wheel deflation has occurred, it is considered that the possibility that one-wheel deflation has occurred is even higher when |Q(k) - P(k)| exceeds the predetermined threshold value Th5. As described above, the determination based on |Q(k) - P(k)| can be used as an auxiliary means to improve the accuracy of the deflation determination based on the slope O(k).

Referring again to FIG. 5A, when it is determined in step S36 that no one-wheel deflation has occurred (NO), the third deflation detection process in the kth run ends. However, the data required to execute steps S34 and S35 during the (k+1)th run (i.e., during the next run) such as regression coefficients including the representative value Q(k) determined in step S34, the slope O(k), the intercept P(k), etc., are stored in a nonvolatile memory such as the storage device 15 or an EPROM which is not shown.

On the other hand, when it is determined in step S36 that one-wheel deflation has occurred (YES), step S37 is executed. Step S37 is the same as step S19 and thus the description thereof is omitted.

<3. Features>

(1) With the deflation detection device 2 according to the above embodiment and the first to third deflation detection processes, one-wheel deflation can be detected even without the driver performing any particular initialization operation. This eliminates concerns about a decrease in the accuracy of deflation detection due to failure to perform the initialization operation or performing the initialization operation at a wrong timing. In addition, there is no need to take measures to ensure that the driver performs the initialization operation at an appropriate time, thereby simplifying the configuration.
(2) Since the first to third deflation detection processes are performed based on the rotation speeds of the tires, there is no need to introduce new equipment into the vehicle 1. In addition, the first to third deflation detection processes can be performed in parallel with a different deflation detection process conforming to the DLR method, for example.
(3) The first to third deflation detection processes each target the detection of one-wheel deflation with a different progress speed. Therefore, by using these processes in combination, the accuracy of detection of one-wheel deflation can be further improved.

<4. Modifications>

Although an embodiment of the present invention has been described above, the present invention is not limited to that embodiment. Various changes and modifications can be made thereto without departing from the spirit and scope of the present invention. For example, changes and modifications described below can be made. In addition, the features of the following modifications may be combined as appropriate.

(1) The deflation detection device 2 according to the above embodiment is configured to execute the first to third deflation detection processes. However, the deflation detection device 2 may be configured to execute any one or any two of the first to third deflation detection processes.
(2) The relative deflation index may be any index that compares the rotation speed of each tire and is not limited to the one defined by the equation of the above embodiment. For example, as DEL1, one defined by the following equation may be used.

$$DEL1 = [(V2 + V3)/2 - (V1 + V4)/2]/[(V1 + V2 + V3 + V4)/4] \times 100 \ (\%)$$

Alternatively, instead of DEL1, the following relative deflation indexes conventionally referred to as DEL2 and DEL3 may be used. However, DEL1 is an index that compares the rotation speed of tires located diagonally opposite each other in a four-wheeled vehicle (i.e., an index that increases as the rotation speeds V1 and V4 increase and decreases as the rotation speeds V2 and V3 increase, or increases as the rotation speeds V2 and V3 increase and decreases as the rotation speeds V1 and V4 increase), and thus is less likely to be influenced by cornering of the vehicle 1 or load changes compared to DEL2 and DEL3. Therefore, from the viewpoint of the accuracy of deflation detection, DEL1 is advantageous compared to DEL2 and DEL3.

$$DEL2 = [(V3 + V4)/2 - (V1 + V2)/2] / [(V1 + V2 + V3 + V4)/4] \times 100 \ (\%)$$

$$DEL3 = [(V2 + V4)/2 - (V1 + V3)/2] / [(V1 + V2 + V3 + V4)/4] \times 100 \ (\%)$$

$$DEL2 = [(V3 + V4)/(V1 + V2) - 1] \times 100 \ (\%)$$

$$DEL3 = [(V2 + V4)/(V1 + V3) - 1] \times 100 \ (\%)$$

(3) The above unit of run is an example and can be changed as appropriate. For example, a run that has continued for a predetermined time or longer, excluding temporary stops due to traffic lights, etc., may be defined as the "kth run".

(4) The order in which the steps of the deflation detection processes according to the above embodiment are executed can be changed as appropriate. For example, the timing at which step S10 is executed may be after any of steps S11 to S19. That is, the reset unit 20 can delete the reference value R(k-1) and the regression coefficients M(k-1) and N(k-1) from the storage device 15 at any timing after one run.

(5) The process executed by the trend derivation unit 24 in step S35 is not limited to deriving the regression coefficient. The trend derivation unit 24 may, for example, determine whether or not the representative value Q(k) has increased continuously a predetermined number of times or more or whether or not the representative value Q(k) has decreased continuously a predetermined number of times or more. That is, if the representative value Q(k) increases or decreases continuously with an increase in the elapsed time t, it is considered that one-wheel deflation has occurred. As described above, the trend derivation unit 24 may derive a time-series change trend of the representative value Q(k) without deriving any regression coefficient.

(6) In the above embodiment, the regression analysis unit 23 derives an equation, for a straight line, with the slope M(k) and the intercept N(k) as a regression equation with DEL1 as a response variable and the elapsed time t as an explanatory variable. However, this regression equation is not limited to an equation for a straight line and may be, for example, an equation of l order or higher (l ≥ 2) with the elapsed time t. The deflation determination unit 25 may determine one-wheel deflation based on a coefficient at $t^l$, a coefficient at $t^{l-1}$, or the like.

(7) The steps of the deflation detection processes according to the above embodiment may be executed by a plurality of computers. That is, at least some of steps S10 to S19, steps S21 to S29, and steps S30 to S37 may be executed by other external computers or the like connected to the deflation detection device 2.

## Claims

1. A deflation detection device (2) for one-wheel deflation, comprising:

   an acquisition unit (21) configured to acquire rotation speed information of each of tires ($T_{FL}$, $T_{FR}$, $T_{RL}$, $T_{RR}$) included in a vehicle (1) during running of the vehicle (1);
   an index calculation unit (22) configured to calculate a relative deflation index that compares a rotation speed (V1, V2, V3, V4) of each of the tires ($T_{FL}$, $T_{FR}$, $T_{RL}$, $T_{RR}$), based on the acquired rotation speed information;
   a storage unit (15) configured to store the relative deflation index calculated at a first time point during a period when the vehicle (1) makes a first run, as a reference value (R); and
   a deflation determination unit (25) configured to determine whether or not deflation has occurred in one tire among the tires ($T_{FL}$, $T_{FR}$, $T_{RL}$, $T_{RR}$), based on the reference value (R) and the relative deflation index calculated at a second time point after the first time point during the first run.

2. The deflation detection device (2) according to claim 1, further comprising a regression analysis unit (23) configured to, based on multiple data sets of an elapsed time (t) from start of the first run and the relative deflation index at the elapsed time (t), derive a regression equation with the relative deflation index as a response variable and the elapsed time (t) as an explanatory variable, wherein
the deflation determination unit (25) further determines whether or not deflation has occurred in one tire among the tires ($T_{FL}$, $T_{FR}$, $T_{RL}$, $T_{RR}$), based on a regression coefficient ($M(k)$) included in the regression equation.

3. The deflation detection device (2) according to claim 1 or 2, further comprising a reset unit (20) configured to delete the reference value (R) from the storage unit (15) after the first run if, during the first run, it is not determined by the deflation determination unit (25) that deflation has occurred in the one tire.

4. The deflation detection device (2) according to any one of claims 1 to 3, further comprising a trend derivation unit (24) configured to, based on multiple data sets of a time $t(k)$ corresponding to a kth ($k$ = 1, 2, ..., n) run of the vehicle (1) in time-series order and a representative value $Q(k)$ of the relative deflation index calculated during the kth run, derive a time-series change trend of the representative value $Q(k)$, wherein
the deflation determination unit (25) further determines whether or not deflation has occurred in one tire among the tires ($T_{FL}$, $T_{FR}$, $T_{RL}$, $T_{RR}$), based on the change trend.

5. A deflation detection device (2) for one-wheel deflation, comprising:

an acquisition unit (21) configured to acquire rotation speed information of each of tires ($T_{FL}$, $T_{FR}$, $T_{RL}$, $T_{RR}$) included in a vehicle (1) during running of the vehicle (1);
an index calculation unit (22) configured to calculate a relative deflation index that compares a rotation speed (V1, V2, V3, V4) of each of the tires ($T_{FL}$, $T_{FR}$, $T_{RL}$, $T_{RR}$), based on the acquired rotation speed information;
a regression analysis unit (23) configured to, based on multiple data sets of an elapsed time (t) from start of the first run and the relative deflation index at the elapsed time (t), derive a regression equation with the relative deflation index as a response variable and the elapsed time (t) as an explanatory variable, during a period when the vehicle (1) makes a first run; and
a deflation determination unit (25) configured to determine whether or not deflation has occurred in one tire among the tires ($T_{FL}$, $T_{FR}$, $T_{RL}$, $T_{RR}$), based on a regression coefficient ($M(k)$) included in the regression equation.

6. A deflation detection device (2) for one-wheel deflation, comprising:

an acquisition unit (21) configured to acquire rotation speed information of each of tires ($T_{FL}$, $T_{FR}$, $T_{RL}$, $T_{RR}$) included in a vehicle (1) during running of the vehicle (1);
an index calculation unit (22) configured to calculate a relative deflation index that compares a rotation speed (V1, V2, V3, V4) of each of the tires ($T_{FL}$, $T_{FR}$, $T_{RL}$, $T_{RR}$), based on the acquired rotation speed information;
a trend derivation unit (24) configured to, based on multiple data sets of a time $t(k)$ corresponding to a kth ($k$ = 1, 2, ..., n) run of the vehicle (1) in time-series order and a representative value $Q(k)$ of the relative deflation index calculated during the kth run, derive a time-series change trend of the representative value $Q(k)$; and
a deflation determination unit (25) configured to determine whether or not deflation has occurred in one tire among the tires ($T_{FL}$, $T_{FR}$, $T_{RL}$, $T_{RR}$), based on the change trend.

7. A deflation detection method for one-wheel deflation, executed by one or more computers connected to a storage unit (15), the deflation detection method comprising:

acquiring rotation speed information of each of tires ($T_{FL}$, $T_{FR}$, $T_{RL}$, $T_{RR}$) included in a vehicle (1) during running of the vehicle (1) (S11);
calculating a relative deflation index that compares a rotation speed (V1, V2, V3, V4) of each of the tires ($T_{FL}$, $T_{FR}$, $T_{RL}$, $T_{RR}$), based on the acquired rotation speed information (S14, S17);
storing the relative deflation index calculated at a first time point during a period when the vehicle (1) makes a first run, as a reference value (R) in the storage unit (15) (S14); and
determining whether or not deflation has occurred in one tire among the tires ($T_{FL}$, $T_{FR}$, $T_{RL}$, $T_{RR}$), based on the reference value (R) and the relative deflation index calculated at a second time point after the first time point during the first run (S18).

8. A deflation detection method for one-wheel deflation, executed by one or more computers, the deflation detection method comprising:

acquiring rotation speed information of each of tires ($T_{FL}$, $T_{FR}$, $T_{RL}$, $T_{RR}$) included in a vehicle (1) during running of the vehicle (1) (S21, S27);

calculating a relative deflation index that compares a rotation speed (V1, V2, V3, V4) of each of the tires ($T_{FL}$, $T_{FR}$, $T_{RL}$, $T_{RR}$), based on the acquired rotation speed information (S24);
based on multiple data sets of an elapsed time (t) from start of the first run and the relative deflation index at the elapsed time (t), deriving a regression equation with the relative deflation index as a response variable and the elapsed time (t) as an explanatory variable, during a period when the vehicle (1) makes a first run (S25); and
determining whether or not deflation has occurred in one tire among the tires ($T_{FL}$, $T_{FR}$, $T_{RL}$, $T_{RR}$), based on a regression coefficient (M(k)) included in the regression equation (S26).

9. A deflation detection method for one-wheel deflation, executed by one or more computers, the deflation detection method comprising:

acquiring rotation speed information of each of tires ($T_{FL}$, $T_{FR}$, $T_{RL}$, $T_{RR}$) included in a vehicle (1) during running of the vehicle (1) (S30);
calculating a relative deflation index that compares a rotation speed (V1, V2, V3, V4) of each of the tires ($T_{FL}$, $T_{FR}$, $T_{RL}$, $T_{RR}$), based on the acquired rotation speed information (S33);
based on multiple data sets of a time t(k) corresponding to a kth (k = 1, 2, ..., n) run of the vehicle (1) in time-series order and a representative value Q(k) of the relative deflation index calculated during the kth run, deriving a time-series change trend of the representative value Q(k) (S35); and
determining whether or not deflation has occurred in one tire among the tires ($T_{FL}$, $T_{FR}$, $T_{RL}$, $T_{RR}$), based on the change trend (S36).

10. A deflation detection program for one-wheel deflation, causing one or more computers connected to a storage unit (15) to execute:

acquiring rotation speed information of each of tires ($T_{FL}$, $T_{FR}$, $T_{RL}$, $T_{RR}$) included in a vehicle (1) during running of the vehicle (1) (S11);
calculating a relative deflation index that compares a rotation speed (V1, V2, V3, V4) of each of the tires ($T_{FL}$, $T_{FR}$, $T_{RL}$, $T_{RR}$), based on the acquired rotation speed information (S14, S17);
storing the relative deflation index calculated at a first time point during a period when the vehicle (1) makes a first run, as a reference value (R) in the storage unit (15) (S14); and
determining whether or not deflation has occurred in one tire among the tires ($T_{FL}$, $T_{FR}$, $T_{RL}$, $T_{RR}$), based on the reference value (R) and the relative deflation index calculated at a second time point after the first time point during the first run (S18).

11. A deflation detection program for one-wheel deflation, causing one or more computers to execute:

acquiring rotation speed information of each of tires ($T_{FL}$, $T_{FR}$, $T_{RL}$, $T_{RR}$) included in a vehicle (1) during running of the vehicle (1) (S21, S27);
calculating a relative deflation index that compares a rotation speed (V1, V2, V3, V4) of each of the tires ($T_{FL}$, $T_{FR}$, $T_{RL}$, $T_{RR}$), based on the acquired rotation speed information (S24);
based on multiple data sets of an elapsed time (t) from start of the first run and the relative deflation index at the elapsed time (t), deriving a regression equation with the relative deflation index as a response variable and the elapsed time (t) as an explanatory variable, during a period when the vehicle (1) makes a first run (S25); and
determining whether or not deflation has occurred in one tire among the tires ($T_{FL}$, $T_{FR}$, $T_{RL}$, $T_{RR}$), based on a regression coefficient (M(k)) included in the regression equation (S26).

12. A deflation detection program for one-wheel deflation, causing one or more computers to execute:

acquiring rotation speed information of each of tires ($T_{FL}$, $T_{FR}$, $T_{RL}$, $T_{RR}$) included in a vehicle (1) during running of the vehicle (1) (S30);
calculating a relative deflation index that compares a rotation speed (V1, V2, V3, V4) of each of the tires ($T_{FL}$, $T_{FR}$, $T_{RL}$, $T_{RR}$), based on the acquired rotation speed information (S33);
based on multiple data sets of a time t(k) corresponding to a kth (k = 1, 2, ..., n) run of the vehicle (1) in time-series order and a representative value Q(k) of the relative deflation index calculated during the kth run, deriving a time-series change trend of the representative value Q(k) (S35); and
determining whether or not deflation has occurred in one tire among the tires ($T_{FL}$, $T_{FR}$, $T_{RL}$, $T_{RR}$), based on the change trend (S36).

FIG. 1

FIG. 2

DEFLATION DETECTION DEVICE (CONTROL UNIT) 2

CPU 12

RESET UNIT 20

ACQUISITION UNIT 21

INDEX CALCULATION UNIT 22

REGRESSION ANALYSIS UNIT 23

TREND DERIVATION UNIT 24

DEFLATION DETERMI-NATION UNIT 25

WARNING GENERATION UNIT 26

I/O INTERFACE 11

STORAGE DEVICE 15

RAM 14

ROM 13

PROGRAM 9

3

6
6
6
6

8

# FIG. 3A

START

RESET DATA STORED LAST TIME — S10

ACQUIRE ROTATION SPEED INFORMATION FROM WHEEL — S11

IS DATA VALID? — S12
REJECT DATA
NO

YES

HAVE PREDETERMINED NUMBER OF PIECES OF DATA BEEN ACCUMULATED? — S13
NO

YES

CALCULATE RELATIVE DEFLATION INDEX AND STORE RELATIVE DEFLATION INDEX AS REFERENCE VALUE — S14

ACQUIRE ROTATION SPEED INFORMATION FROM WHEEL SPEED SENSORS — S15

IS DATA VALID? — S16
NO

YES

CALCULATE RELATIVE DEFLATION INDEX DEL1 — S17

HAS ONE-WHEEL DEFLATION OCCURRED? — S18
NO

YES

GENERATE WARNING — S19

FIG. 3B

# FIG. 4A

FIG. 4B

## FIG. 5A

START

ACQUIRE ROTATION SPEED INFORMATION
FROM WHEEL SPEED SENSORS — S30

IS DATA VALID? — S31
REJECT DATA
NO
YES

HAVE PREDETERMINED NUMBER OF PIECES OF DATA BEEN ACCUMULATED? — S32
NO
YES

CALCULATE DEL1 — S33

DETERMINE REPRESENTATIVE VALUE Q(k) OF DEL1 — S34

DERIVE REGRESSION COEFFICIENTS — S35

HAS ONE-WHEEL DEFLATION OCCURRED? — S36
YES — S37
NO

END

GENERATE WARNING

FIG. 5B

Europäisches
Patentamt

European
Patent Office

Office européen
des brevets

## EUROPEAN SEARCH REPORT

**Application Number**

EP 25 20 5269

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 031156 A1 (CONTINENTAL TEVES AG & CO OHG [DE]) 9 February 2006 (2006-02-09) * paragraph [0014] - paragraph [0039]; figures 1-4 * ----- | 1-12 | INV. B60C23/06 |
| A | US 5 712 616 A (SCHMITT JOHANNES [DE] ET AL) 27 January 1998 (1998-01-27) * column 3 - column 5; figures 1-2g * ----- | 1-12 | |
| A | JP 2017 149340 A (SUMITOMO RUBBER IND) 31 August 2017 (2017-08-31) * the whole document * ----- | 1-12 | |

| | TECHNICAL FIELDS SEARCHED (IPC) |
|---|---|
| | B60C |

The present search report has been drawn up for all claims

| Place of search | Date of completion of the search | Examiner |
|---|---|---|
| Munich | 17 February 2026 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 5269

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | Publication date | Patent family member(s) | | Publication date |
|---|---|---|---|---|
| DE 102005031156 A1 | 09-02-2006 | NONE | | |
| US 5712616 A | 27-01-1998 | DE | 19619393 A1 | 30-01-1997 |
| | | JP | H0939526 A | 10-02-1997 |
| | | US | 5712616 A | 27-01-1998 |
| JP 2017149340 A | 31-08-2017 | JP | 6693170 B2 | 13-05-2020 |
| | | JP | 2017149340 A | 31-08-2017 |

EPO FORM P0459

**EP 4 737 140 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017149340 A